(19) Europäisches Patentamt
European Patent Office
Office européen des brevets

(11) **EP 4 059 989 B1**

(12) **EUROPEAN PATENT SPECIFICATION**

(45) Date of publication and mention
of the grant of the patent:
**06.12.2023 Bulletin 2023/49**

(21) Application number: **20888177.1**

(22) Date of filing: **22.10.2020**

(51) International Patent Classification (IPC):
**C08G 69/24** (2006.01)     **C08G 69/20** (2006.01)

(52) Cooperative Patent Classification (CPC):
**C08G 69/20; C08G 69/24**

(86) International application number:
**PCT/JP2020/039787**

(87) International publication number:
**WO 2021/095482 (20.05.2021 Gazette 2021/20)**

(54) **METHOD FOR PRODUCING POLYAMIDE, AND POLYAMIDE**

VERFAHREN ZUM PRODUZIEREN VON POLYAMID UND POLYAMID

POLYAMIDE, ET PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2019 JP 2019204118**

(43) Date of publication of application:
**21.09.2022 Bulletin 2022/38**

(73) Proprietor: **Kureha Corporation
Chuo-ku
Tokyo 103-8552 (JP)**

(72) Inventors:
• **MASAKI, Takashi**
  **Tokyo 103-8552 (JP)**
• **SUZUKI, Yoshinori**
  **Tokyo 103-8552 (JP)**

(74) Representative: **Novagraaf Group
Chemin de l'Echo 3
1213 Onex / Geneva (CH)**

(56) References cited:
WO-A1-2012/161174     JP-A- H06 322 109
JP-A- 2017 190 449     KR-A- 20110 109 338
US-A- 2 739 959

• HUANG R. Y. M. ET AL: "Investigations on nylon 4 membranes. Synthesis and transport properties. I. Synthesis of nylon 4 polymer", JOURNAL OF APPLIED POLYMER SCIENCE, vol. 26, no. 4, 1 April 1981 (1981-04-01), pages 1135-1142, XP055979730, US ISSN: 0021-8995, DOI: 10.1002/app.1981.070260407
• Rinke Heinrich ET AL: "Polyamide" In: "Methoden der Organischen Chemie (Houben-Weyl), XIV/2: Makromolekulare Stoffe", 1 January 1963 (1963-01-01), Georg Thieme Verlag, Stuttgart, XP055980457, ISBN: 978-3-13-197274-3 pages 99-119, DOI: 10.1055/b-0035-116262, Retrieved from the Internet: URL:http://dx.doi.org/10.1055/b-0035-11626 2> * page 116, second paragraph *
• Norioki KAWASAKI, Naoko YAMANO, Maki Oshima, Sahori TAKEDA, Atsuyoshi NAKAYAMA: "Synthesis of polyamide4 powder by suspension polymerization", Polymer preprints, Japan, vol. 59, no. 2, 2010, page 5210, XP009536178,

EP 4 059 989 B1

**Description**

**TECHNICAL FIELD**

The present invention relates to a method for producing a polyamide.

**BACKGROUND ART**

A polyamide 4 has been studied as a biodegradable resin that can be a replacement for a nondegradable nylon resin. As a polymerization initiator used during production of the polyamide 4, imide compounds of pyrrolidone and carboxylic acid compounds have been known. For example, Patent Document 1 describes carboxylic halides, carboxylic anhydrides, and carboxylates as examples of the carboxylic acid compound used in the production of polyamide 4.

R. Y. M. Huang et al., Investigations on nylon 4 membranes. Synthesis and properties I. Synthesis of nylon 4 polymer, Journal of Applied Polymer Science, Vol. 26, No. 4, April 1981, pages 1135 to 1142, describe the synthesis of nylon 4 (polypyrrolidone) by the anionic polymerization of 2-pyrrolidone through the use of the $CO_2$/potassium pyrrolidonate catalyst system for use in preparing polymer membranes for separation purposes. The effects of the quantity of $CO_2$, the potassium pyrrolidonate catalyst, and the reaction temperature on the yield and molecular weights of the nylon 4 were studied. At reaction temperatures of 50°C and a reaction time of 120 hours, a yield of 50.9 % with an intrinsic viscosity of 4.42 (corresponding to $M_n$ of 108,200 and $M_w$ of 135,850) was obtained. The molecular weight distributions of the nylon 4 were determined by gel permeation chromatography (GPC) using m-cresol as the eluting solvent and were found to have a relatively narrow distribution.

US 2 739 959 A refers to the polymerization of a lactam selected from group consisting of pyyrolidone and piperidone in the presence of an alkaline polymerization catalyst and an acyl group containing activator therefor, the improvement comprising carrying out the polymerization of the lactam while dispersed in an anhydrous non-solvent therefor.

H. Rinke and E. Istel, Polyamide, in Methoden der Organischen Chemie, (Houben-Weyl), Makromolekulare Stoffe, 1 January 1963, pages 99 to 119, disclose *inter alia* the polymerization of lactams. It is described that imides, amides, isocyanates, carbodiimides, cyanamides, acylamino carboxylic acid esters, anhydrides, esters or halogenides of carboxylic acids, guanidines, amidines, urethanes, and isothioureas can be used as co-activators or stabilizers when polymerizing lactams.

**CITATION LIST**

Patent Document

Patent Document 1: JP 2002-265596 A

**SUMMARY OF INVENTION**

Technical Problem

In the case where an imide compound of pyrrolidone is used as a polymerization initiator, synthesis of an imide compound is necessary as a preliminary step of polymerization of the polyamide 4, and increase of steps has been a problem. Furthermore, there is also a problem of increase in cost because an excessive amount of pyrrolidone is used during the synthesis of an imide compound. Furthermore, especially, there are problems in a high molecular weight polyamide 4 polymerized by using an imide compound because such polyamide 4 has a large distribution of polymer chain length and lacks uniformity.

In the case where a carboxylic acid chloride such as carboxylic halide or carboxylic anhydride is used as a polymerization initiator, polymerization of a polyamide 4 is required to be performed in a heating condition under a reduced pressure. Also in the case where a carboxylate is used as a polymerization initiator, polymerization of a polyamide 4 may be required to be performed in a heating condition under a reduced pressure. Therefore, there is a problem that the polymerization device becomes complex. Furthermore, because carboxylic acid chloride and carboxylic anhydride, and hydrochloric acid and carboxylic acid, which are the polymerization reaction by-products, have corrosivity, polymerization of the polyamide 4 needs to be performed by using a corrosion-resistant reactor.

The present invention has been made in light of the problems described above, and an object of the present invention is to provide a production method that can simply and easily produce a polyamide in a high yield in a room temperature condition under ambient pressure.

## SOLUTION TO PROBLEM

The present inventors found that the problems described above can be solved by using a specific carboxylate as a polymerization initiator and thus completed the present invention.

The method for producing a polyamide according to independent claim 1 of the present invention is a method comprising polymerizing a raw material monomer having at least one alkylene group and at least one amide bond in the presence of a basic catalyst and a polymerization initiator, the number of carbons of the alkylene group being 1 or more and 3 or less, and the raw material monomer is 2-pyrrolidone, and the used amount of the polymerization initiator is 0.1 mol% or more and 2.0 mol% or less with respect to the total amount of the supplied raw material monomer, and the polymerization initiator being a linear carboxylate having a structure derived from a secondary or tertiary alcohol, wherein the linear carboxylate refers to a carboxylate other than lactones, that is, a carboxylate other than cyclic esters which are compounds each having an ester bond in a ring.

Furthermore, according to a preferred embodiment the polyamide according to the present invention can be formed when the number of carbon atoms of the secondary or tertiary alcohol is 8 or less. According to another preferred embodiment, the added amount of the polymerization initiator is 0.2 mol% or more and 1.5 mol% or less with respect to the amount of the raw material monomer.

## ADVANTAGEOUS EFFECTS OF INVENTION

According to an aspect of the present invention, a production method that can simply and easily produce a polyamide in a high yield in a room temperature condition under ambient pressure can be provided.

## DESCRIPTION OF EMBODIMENTS

Method for Producing Polyamide

The polyamide obtained by the method for producing a polyamide according to the present embodiment (hereinafter, simply abbreviated to "production method of the present embodiment") is a high molecular weight compound having a structural unit represented by -CONH-. The polyamide obtained by the production method of the present embodiment will be described below.

The production method of the present embodiment includes a polymerization process of polymerizing a raw material monomer in the presence of a basic catalyst and a polymerization initiator.

Raw Material Monomer

The raw material monomer used in the production method of the present embodiment is 2-pyrrolidone.

Basic Catalyst

The basic catalyst to be used in the production method of the present embodiment is not particularly limited as long as it can generate an anionic species in the raw material monomer. Examples of the basic catalyst include those used as polymerization catalysts for anionic polymerization, such as alkali metals and alkaline earth metals, and hydrides, oxides, hydroxides, carbonates, carboxylates, alkylates, and alkoxides of these metals. Examples of the alkali metal include lithium, sodium, potassium, rubidium, and cesium. Among these, from the perspective of ease in handling, an alkoxide of alkali metal is preferred, and an alkoxide of tertiary alcohol is more preferred. The basic catalyst may be used alone, or two or more types thereof may be used in combination.

The used amount (added amount) of the basic polymerization catalyst is not particularly limited and is preferably 0.1 mol% or greater and 10 mol% or less, more preferably 1 mol% or greater and 4 mol% or less, and even more preferably 2 mol% or greater and 4 mol% or less, with respect to the total amount of the supplied raw material monomer. When the used amount of the basic polymerization catalyst is in the range described above, the yield of the resulting polyamide becomes high.

Polymerization Initiator

The polymerization initiator to be used in the production method of the present embodiment is a linear carboxylate having a structure derived from a secondary or tertiary alcohol. Specifically, the linear carboxylate refers to a carboxylate other than lactones, that is, a carboxylate other than cyclic esters which are compounds each having an ester bond in a ring. Thus, as long as an ester bond is present in the linear structure part, a compound in which a group having a cyclic structure is bonded to a linear structure is also included in the linear carboxylate.

From the perspective of removal of alcohols generated as by-products, the number of carbons of the secondary or tertiary alcohol is preferably 8 or less. Examples of the secondary alcohol having 8 or less carbons include 2-propanol (isopropanol), diisopropanol, 2-butanol (sec-butanol), 2-pentanol, 4-methyl-2-pentanol, 2-pentanol, 2-hexanol, 2-heptanol, 5-methyl-2-hexanol, 2-octanol, cyclopentanol, and cyclohexanol. Examples of the tertiary alcohol having 8 or less carbons include 2-methyl-2-propanol (tert-butanol), di-tert-butanol, 2-methyl-2-butanol (tert-amyl alcohol), 1-ethynyl-1-cyclopropanol, and 1-adamantanol. From thermal stability of the formed polymer, a linear carboxylate having a structure derived from a tertiary alcohol is preferred.

The number of carbons of the structure derived from carboxylic acid of the linear carboxylate is not particularly limited and is preferably 18 or less from the perspective of solubility in the raw material monomer. The carboxylic acid may be a monocarboxylic acid or a dicarboxylic acid. Examples of the monocarboxylic acid having 18 or less carbons include acetic acid, propionic acid, butyric acid, valeric acid, caproic acid, caprylic acid, lauric acid, tridecanoic acid, myristic acid, palmitic acid, stearic acid, pivalic acid, and isobutyric acid. Examples of the dicarboxylic acid having 18 or less carbons include oxalic acid, malonic acid, succinic acid, glutaric acid, adipic acid, pimelic acid, suberic acid, azelaic acid, sebacic acid, dodecanedioic acid, tetradecanedioic acid, fumaric acid, and maleic acid.

Examples of the polymerization initiator to be used in the production method of the present embodiment include tert-butyl acetate, sec-butyl acetate, isopropyl acetate, cyclohexyl acetate, diisopropyl adipate, isopropyl laurate, isopropyl myristate, isopropyl palmitate, and di-tert-butyl malonate.

The used amount (added amount) of the polymerization initiator is 0.1 mol% or more and 2.0 mol% or less, and preferably 0.2 mol% or more and 1.5 mol% or less, with respect to the total amount of the supplied raw material monomer. When the used amount of the polymerization initiator is in the range described above, a polyamide that has a high molecular weight can be obtained.

Polymerization Accelerator

In the production method of the present embodiment, a polymerization accelerator may be used. By using the polymerization accelerator, the polymerization process can be accelerated, and the time for the polymerization process can be shortened. Examples of the polymerization accelerator include onium salts, crown ethers, and carbon dioxide.

Other Raw Materials

Additives may be added as necessary in the polymerization reaction. Examples of the additives include surfactants, antioxidants, stabilizers, dyes, and pigments. They may be used in combination of two or more types of them. The amount of the additive to be used may be adjusted within a range that does not impair the object and effect of the present invention.

Polymerization process

The polymerization process of the production method of the present embodiment may be performed, for example, as follows. Firstly, a basic catalyst is added to the raw material monomer, thereby generating an anionic species in the raw material monomer. Then, a polymerization initiator is added to cause polymerization reaction, thereby initiating the polymerization process. The addition of the raw material monomer may be performed by supplying the raw material monomer to the reaction system at once or added to the reaction system by dividing into multiple portions.

The temperature (polymerization temperature) in the reaction system in the polymerization process can be, for example, in a range of 15 to 70°C, and is preferably in a range of 20 to 60°C, and more preferably in a range of 25 to 50°C. The polymerization process can be performed at room temperature. In the case where the polymerization process is performed at room temperature, the reactor in the polymerization process is not particularly limited. For example, the polymerization process can be performed in a simple reaction system in which a reaction solution is simply agitated in a plastic container, glass container, or metal container. When the polymerization temperature is lower than the range described above, the raw material monomer is readily solidified, and the reaction may be slower. When the polymerization temperature is higher than the range described above, a polymer obtained by the polymerization process may be colored.

The reaction time (polymerization time) in the polymerization process can be appropriately adjusted based on, for example, the reaction temperature or the amount ratio of the raw materials. The polymerization reaction can be initiated by addition of the polymerization initiator. Furthermore, the polymerization reaction may be terminated by addition of a known polymerization terminator.

The polymerization process can be performed at ambient pressure. When the polymerization process is performed at ambient pressure, the polymerization process can be performed in a system that is open or a system that is closed.

The polymerization process may be performed until the conversion ratio of the raw material monomer becomes preferably 30% or greater, more preferably 50% or greater, and even more preferably 70% or greater. The conversion ratio of the raw material monomer can be calculated by determining the amount of the raw material monomer remaining in the reaction mixture by gas chromatography and performing a calculation based on the remaining amount of the raw material monomer and the charged amount of the raw material monomer.

As described in Examples, by using a linear carboxylate having a structure derived from a secondary or tertiary alcohol as a polymerization initiator, polymerization reaction can be allowed to proceed even at room temperature under ambient pressure. Therefore, the reactor is not particularly limited and, for example, the polyamide can be obtained by a simple device in which a reaction solution is simply agitated in a plastic container, glass container, or metal container. Furthermore, the polymerization initiator has no corrosivity, and thus there is no need for using a corrosion-resistant reactor.

Other Processes

The production method of the present embodiment may further include processes other than the aforementioned polymerization process as long as the effects of the present embodiment can be obtained. Examples of such other processes include a crosslinking process of crosslinking the polyamide obtained in the polymerization process.

[Polyamide]

A polyamide that can be obtained by the production method of the present embodiment is not included in the present invention. The polyamide that can be produced by the method of the present invention is not particularly limited as long as the polyamide is composed of a repeat of structural units having at least one alkylene group and at least one amide bond. This structural unit can have 1 or more and 2 or less alkylene groups. Furthermore, this structural unit can have 1 or more and 2 or less amide bonds. The number of the repeating structural units may be appropriately determined according to the weight average molecular weight of the polyamide.

There are no particular limitations as long as the number of carbons of each of the alkylene groups is 1 or more and 3 or less. In addition, the alkylene group may be a linear chain or a branched chain. Furthermore, in the case where a plurality of alkylene groups is contained in the structural unit, each of the number of carbons can be independently 1 or more and 3 or less.

Examples of the structural unit include structural units represented by Formula (1) below.

$$-(CH_2)_{x-1}-CONH- ... \qquad (1)$$

In Formula (1), x is an integer of 2 or greater and 4 or less and is preferably 2 or 3. In the present specification, a polyamide having repeating units represented by Formula (1) may be referred to as a "polyamide x" according to the number used for x in Formula (1). For example, a polyamide for which x in Formula (1) is 4 is referred to as "polyamide 4". An example of the polyamide obtained by the production method of the present embodiment is polyamide 4.

The lower limit of the weight average molecular weight (Mw) of the polyamide obtained in the production method of the present embodiment is can be 50000 or greater, or 55000 or greater, or 60000 or greater. Furthermore, the upper limit of the weight average molecular weight can be 1000000 or less, or 500000 or less. The weight average molecular weight can be measured by, for example, gel permeation chromatography (GPC). A polyamide having the weight average molecular weight in the numeric value range described above is suitable as a raw material for a molded article.

Furthermore, the upper limit of the polydispersity of the polyamide obtained by the production method of the present embodiment is 3 or less, or 2.5 or less, or 2 or less. The polydispersity in the present specification is a numeric value represented by weight average molecular weight/number average molecular weight (Mw/Mn) and is also referred to as molecular weight distribution. The number average molecular weight can be measured by gel permeation chromatography (GPC). The polyamide having the polydispersity in the numeric value range described above has a small amount of oligomers which are low molecular weight substances, and thus the amount of eluting component in a use environment is small, and stable properties are exhibited. Furthermore, because of a small content of terminal groups promoting thermolysis, stable processability of the polyamide during melt molding is enhanced. Furthermore, a molded article formed from a polyamide having the polydispersity in the numeric value range described above shows high mechanical strength.

[Summary]

The method according to the present embodiment for producing a polyamide is a method including polymerizing a raw material monomer having at least one alkylene group and at least one amide bond in the presence of a basic catalyst and a polymerization initiator, the number of carbons of the alkylene group being 1 or more and 3 or less, and the polymerization initiator being a linear carboxylate having a structure derived from a secondary or tertiary alcohol.

In the method according to the present embodiment for producing a polyamide, the number of carbons of the secondary or tertiary alcohol may be 8 or less.

In the method according to the present embodiment for producing a polyamide, the raw material monomer is 2-pyrrolidone.

In the method according to the present embodiment for producing a polyamide, the added amount of the polymerization initiator is 0.1 mol% or more and 2.0 mol% or less with respect to an amount of the raw material monomer.

The polyamide that can be produced according to the method of present embodiment is composed of a repeat of structural units having at least one alkylene group and at least one amide bond, where the number of carbons of the alkylene group is each 1 or more and 3 or less, a weight average molecular weight is 50000 or more, and a polydispersity (Mw/Mn) is 3 or less.

The polyamide produced by the method according to the present embodiment may be polyamide 4.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention.

[Examples]

In the following Examples, the symbol "%" represents % by mass, unless otherwise indicated.

[Example 1]

In a glass container, 30 g of 2-pyrrolidone (2PDN) was charged as a raw material monomer. Furthermore, 0.791 g (2.0 mol% with respect to the amount of the 2PDN) of potassium tert-butoxide as a basic catalyst and 0.205 g (0.5 mol% with respect to the amount of the 2PDN) of tert-butyl acetate as a polymerization initiator were added and agitated. The agitation was stopped at the stage where the mixture in the glass container was solidified as the reaction progressed. Then, the mixture was allowed to stand still for 24 hours passed from the reaction start, and thus a polyamide was obtained. That is, the polymerization time was 24 hours. All operations were performed at room temperature in an air atmosphere at ambient pressure managed at a dew point of -40°C or lower.

[Example 2]

A polyamide was obtained in the same manner as in Example 1 except for changing the polymerization initiator to sec-butyl acetate (0.5 mol%).

[Example 3]

A polyamide was obtained in the same manner as in Example 1 except for changing the polymerization initiator to isopropyl acetate, the amount of the polymerization initiator to 1.0 mol%, the amount of the catalyst to 4.0 mol%, and the polymerization time to 4 hours.

[Example 4]

A polyamide was obtained in the same manner as in Example 3 except for changing the polymerization initiator to sec-butyl acetate (1.0 mol%).

[Example 5]

A polyamide was obtained in the same manner as in Example 3 except for changing the polymerization initiator to cyclohexyl acetate (1.0 mol%).

[Example 6]

A polyamide was obtained in the same manner as in Example 3 except for changing the polymerization initiator to diisopropyl adipate (1.0 mol%).

[Example 7]

A polyamide was obtained in the same manner as in Example 3 except for changing the polymerization initiator to isopropyl myristate (1.0 mol%).

[Example 8]

A polyamide was obtained in the same manner as in Example 1 except for changing the polymerization initiator to di-tert-butyl malonate (0.5 mol%) and the polymerization time to 72 hours.

[Comparative Example 1]

A polyamide was obtained in the same manner as in Example 1 except for changing the polymerization initiator to butyl acetate (0.5 mol%).

[Comparative Example 2]

A polyamide was obtained in the same manner as in Example 1 except for changing the polymerization initiator to isobutyl acetate (0.5 mol%).

Comparative Example 3

A polyamide was obtained in the same manner as in Example 1 except for changing the polymerization initiator to dimethyl adipate (0.5 mol%).

Comparative Example 4

A polyamide was obtained in the same manner as in Example 1 except for changing the polymerization initiator to adipoyl dipyrrolidone (0.5 mol%).

Comparative Example 5

A polyamide was obtained in the same manner as in Example 1 except for changing the polymerization initiator to acetyl pyrrolidone, the amount of the polymerization initiator to 1.0 mol%, the amount of the catalyst to 2.5 mol%, and the polymerization time to 48 hours.

The polymerization initiator, the amount of the polymerization initiator, the amount of the catalyst, and the polymerization time used for preparation of the polyamides of Examples 1 to 8 and Comparative Examples 1 to 5 are shown in Table 1.

Evaluation of Polyamide

Measurement of Weight Average Molecular Weight (Mw) and Number Average Molecular Weight (Mn)

10 mg of the polyamide sample was dissolved in hexafluoroisopropanol (HFIP), in which sodium trifluoroacetate had been dissolved at a concentration of 5 mM, to prepare a solution of 10 $cm^3$ and then the solution was filtered using a membrane filter to obtain a sample solution. 10 $\mu$L of the sample solution was injected into the analysis device described below, and the weight average molecular weight Mw and the number average molecular weight Mn of the polyamide were measured under the measurement conditions described below.

- Analyzer: gel permeation chromatography (GPC) analysis device (GPC104, available from Showa Denko K.K.)
- Measurement Conditions:

  A) SHODEX 104 System
  B) Column: Showa Denko HFIP 606 $\times$ 2 in series, 40°C
  C) 5 mM $CF_3COONa$/HFIP, 0.1 mL/min
  D) Detector: RI
  E) 10 mg of sample/5 mM $CF_3COONa$/10 mL of HFIP
  F) Calibration (in terms of PMMA) using a PMMA standard substance (150 E4, 65.9 E4, 21.8 E4, 4.96 E4, 2.06 E4, 0.68 E4, 0.2 E4).

Measurement of Conversion Ratio

Approximately 0.1 to 0.2 g of the polyamide after the polymerization reaction was dissolved in 10 mL of HFIP. Then, the polymer was precipitated by adding 40 mL of acetone with respect to 10 mL of HFIP. The amount of 2-pyrrolidone was determined by gas chromatography (GC) analysis of filtrate obtained by filtering the acetone solution after precipitation of the polymer with a membrane filter. The measurement conditions in the GC analysis are as follows.

Measurement device: "GC-2010 Plus" available from Shimadzu Corporation
Column: Rxi-5 ms: 15 m, 0.25 mm ID: 0.25 $\mu$m
Column temperature: 50°C
Heating program: 50°C (5 min) $\rightarrow$ 20°C/min $\rightarrow$ 250°C (5 min)
FID temperature: 250°C
Carrier gas: He

The residual 2-pyrrolidone ratio was determined from the ratio of the weight of the residual monomer to the weight of the sampling monomer, and the conversion ratio was calculated as follows.

$$\text{Conversion ratio (\%)} = 100 - \{\text{residual 2-pyrrolidone ratio}\} \, (\%)$$

The measurement results of the conversion ratio, the weight average molecular weight (Mw), and the polydispersity (Mw/Mn) of the polyamides of Examples 1 to 8 and Comparative Examples 1 to 5 are shown in Table 2.

Measurement of Weight Average Molecular Weight (Mw) and Number Average Molecular Weight (Mn)

After the polyamide sample obtained by polymerization was pulverized, the polyamide sample was washed multiple times in ion-exchanged water to remove the 2-pyrrolidone and the catalyst. Thereafter, the polyamide sample was vacuum dried at 120°C for 8 hours, and thus a polyamide powder was obtained. Thermogravimetric analysis (TGA) was performed for 10 to 11 mg of the obtained polyamide powder, and the thermal stability was evaluated based on the weight retention. The measurement conditions of the TGA were as follows.

Measurement device: TGA/DSC 2 (Mettler Toledo)
Temperature conditions: 25°C $\rightarrow$ 20°C/min $\rightarrow$ 270°C (5 min)
Measurement atmosphere: $N_2$

The weight retention after the measurement was 72.3% for the polyamide of Example 1, and 30.4% for the polyamide of Comparative Example 4. From this result, it was found that the polyamide obtained in Example 1 achieved excellent thermal stability.

[Table 1]

| | Polymerization initiator | Polymerization initiator amount (mol%) | Catalyst amount (mol%) | Polymerization time (hr) |
|---|---|---|---|---|
| Example 1 | tert-Butyl acetate | 0.5 | 2.0 | 24 |
| Example 2 | sec-Butyl acetate | 0.5 | 2.0 | 24 |
| Example 3 | Isopropyl acetate | 1.0 | 4.0 | 4 |
| Example 4 | sec-Butyl acetate | 1.0 | 4.0 | 4 |
| Example 5 | Cyclohexyl acetate | 1.0 | 4.0 | 4 |
| Example 6 | Diisopropyl adipate | 1.0 | 4.0 | 4 |
| Example 7 | Isopropyl myristate | 1.0 | 4.0 | 4 |

(continued)

| | Polymerization initiator | Polymerization initiator amount (mol%) | Catalyst amount (mol%) | Polymerization time (hr) |
|---|---|---|---|---|
| Example 8 | Di-tert-butyl malonate | 0.5 | 2.0 | 72 |
| Comparative Example 1 | Butyl acetate | 0.5 | 2.0 | 24 |
| Comparative Example 2 | Isobutyl acetate | 0.5 | 2.0 | 24 |
| Comparative Example 3 | Dimethyl adipate | 0.5 | 2.0 | 24 |
| Comparative Example 4 | Adipoyl dipyrrolidone | 0.5 | 2.0 | 24 |
| Comparative Example 5 | Acetyl pyrrolidone | 1.0 | 2.5 | 48 |

[Table 2]

| | Polymerization initiator | Conversion ratio (%) | Mw ($10^4$) | Mw/Mn |
|---|---|---|---|---|
| Example 1 | tert-Butyl acetate | 68.1 | 10.9 | 1.9 |
| Example 2 | sec-Butyl acetate | 74.4 | 6.1 | 1.7 |
| Example 3 | Isopropyl acetate | 76.3 | 3.8 | 1.7 |
| Example 4 | sec-Butyl acetate | 78.9 | 3.7 | 1.6 |
| Example 5 | Cyclohexyl acetate | 75.1 | 3.5 | 1.5 |
| Example 6 | Diisopropyl adipate | 80.1 | 3.5 | 1.5 |
| Example 7 | Isopropyl myristate | 79.7 | 4.2 | 1.8 |
| Example 8 | Di-tert-butyl malonate | 78.5 | 8.5 | 1.9 |
| Comparative Example 1 | Butyl acetate | 44.2 | 4.2 | 1.8 |
| Comparative Example 2 | Isobutyl acetate | 47.0 | 4.6 | 1.7 |
| Comparative Example 3 | Dimethyl adipate | 41.2 | 3.6 | 1.6 |
| Comparative Example 4 | Adipoyl dipyrrolidone | 76.3 | 18.4 | 4.4 |
| Comparative Example 5 | Acetyl pyrrolidone | 81 8 | 20.6 | 7 1 |

Results

It was found that the polyamides of Examples 1 to 8 can develop polymerization reaction even at room temperature under ambient pressure, and the polyamides can be obtained simply and easily. Furthermore, the polydispersities (Mw/Mn) of the polyamides of Examples 1 to 8 were low. From the results, it was found that a polyamide having a low polydispersity can be simply and easily obtained by using a linear carboxylate having a structure derived from a secondary or tertiary alcohol as a polymerization initiator.

[Industrial Applicability]

The polyamide of the present invention can be used in a wide range of fields such as cosmetic fields, medical fields, and industrial product fields.

**Claims**

**1.** A method for producing a polyamide, the method comprising:

polymerizing a raw material monomer having at least one alkylene group and at least one amide bond in the presence of a basic catalyst and a polymerization initiator,
the number of carbons of the alkylene group being 1 or more and 3 or less, and the raw material monomer is 2-pyrrolidone, and
the used amount of the polymerization initiator is 0.1 mol% or more and 2.0 mol% or less with respect to the total amount of the supplied raw material monomer, and
the polymerization initiator being a linear carboxylate having a structure derived from a secondary or tertiary alcohol, wherein the linear carboxylate refers to a carboxylate other than lactones, that is, a carboxylate other than cyclic esters which are compounds each having an ester bond in a ring.

**2.** The method for producing a polyamide according to claim 1, wherein the number of carbons of the secondary or tertiary alcohol is 8 or less.

**3.** The method for producing a polyamide according to claim 1 or 2, wherein an added amount of the polymerization initiator is 0.2 mol% or more and 1.5 mol% or less with respect to an amount of the raw material monomer.

**Patentansprüche**

**1.** Verfahren zum Herstellen eines Polyamids, das Verfahren umfassend:

Polymerisieren eines Rohmaterialmonomers, das mindestens eine Alkylengruppe und mindestens eine Amidbindung in Gegenwart eines basischen Katalysators und eines Polymerisationsinitiators aufweist,
wobei die Anzahl von Kohlenstoffen der Alkylengruppe 1 oder mehr und 3 oder weniger beträgt, und das Rohmaterialmonomer 2-Pyrrolidon ist, und
die verwendete Menge des Polymerisationsinitiators 0,1 Mol-% oder mehr und 2,0 Mol-% oder weniger in Bezug auf die Gesamtmenge des zugeführten Rohmaterialmonomers beträgt, und
wobei der Polymerisationsinitiator ein lineares Carboxylat ist, das eine Struktur aufweist, die von einem sekundären oder tertiären Alkohol abgeleitet ist, wobei sich das lineare Carboxylat auf ein anderes Carboxylat als Lactone bezieht, d. h. ein anderes Carboxylat als cyclische Ester, die Verbindungen sind, die jeweils eine Esterbindung in einem Ring aufweisen.

**2.** Verfahren zum Herstellen eines Polyamids nach Anspruch 1, wobei die Anzahl an Kohlenstoffen des sekundären oder tertiären Alkohols 8 oder weniger beträgt.

**3.** Verfahren zum Herstellen eines Polyamids nach Anspruch 1 oder 2, wobei eine zusätzliche Menge des Polymerisationsinitiators 0,2 Mol-% oder mehr und 1,5 Mol-% oder weniger in Bezug auf eine Menge des Rohmaterialmonomers beträgt.

**Revendications**

**1.** Procédé de production d'un polyamide, le procédé comprenant :

la polymérisation d'un monomère de matière première ayant au moins un groupe alkylène et au moins une liaison amide en présence d'un catalyseur basique et d'un initiateur de polymérisation,
le nombre de carbones du groupe alkylène étant de 1 ou plus et de 3 ou moins, et le monomère de matière première est la 2-pyrrolidone, et
la quantité utilisée de l'initiateur de polymérisation est de 0,1 % molaire ou plus et de 2,0 % molaires ou moins par rapport à la quantité totale du monomère de matière première fourni, et
l'initiateur de polymérisation étant un carboxylate linéaire ayant une structure issue d'un alcool secondaire ou tertiaire, dans lequel le carboxylate linéaire se réfère à un carboxylate autre que des lactones, c'est-à-dire un carboxylate autre que des esters cycliques qui sont des composés ayant chacun une liaison ester dans un cycle.

**2.** Procédé de production d'un polyamide selon la revendication 1, dans lequel le nombre de carbones de l'alcool secondaire ou tertiaire est de 8 ou moins.

**3.** Procédé de production d'un polyamide selon la revendication 1 ou 2, dans lequel une quantité ajoutée de l'initiateur de polymérisation est de 0,2 % molaire ou plus et de 1,5 % molaire ou moins par rapport à une quantité du monomère de matière première.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2739959 A

- JP 2002265596 A

### Non-patent literature cited in the description

- **R. Y. M. HUANG et al.** Investigations on nylon 4 membranes. Synthesis and properties I. Synthesis of nylon 4 polymer,. *Journal of Applied Polymer Science,* April 1981, vol. 26 (4), 1135-1142

- **H. RINKE ; E. ISTEL.** Polyamide. *Methoden der Organischen Chemie, (Houben-Weyl), Makromolekulare Stoffe,* 01 January 1963, 99-119